(19) Europäisches Patentamt
European Patent Office
Office européen des brevets

(11) **EP 3 727 830 B1**

(12) **EUROPÄISCHE PATENTSCHRIFT**

(45) Veröffentlichungstag und Bekanntmachung des Hinweises auf die Patenterteilung:
**22.03.2023 Patentblatt 2023/12**

(21) Anmeldenummer: **18733850.4**

(22) Anmeldetag: **21.06.2018**

(51) Internationale Patentklassifikation (IPC):
*B30B 1/40* (2006.01)   *B30B 15/28* (2006.01)
*B21D 22/14* (2006.01)   *B21D 37/12* (2006.01)
*B30B 15/14* (2006.01)   *F28C 3/06* (2006.01)

(52) Gemeinsame Patentklassifikation (CPC):
**B30B 1/40; B21D 22/14; B21D 37/12; B30B 15/00; B30B 15/14; B30B 15/28; F28C 3/06**

(86) Internationale Anmeldenummer:
**PCT/EP2018/066688**

(87) Internationale Veröffentlichungsnummer:
**WO 2019/120636 (27.06.2019 Gazette 2019/26)**

(54) **VORRICHTUNG UND VERFAHREN ZUR ÜBERWACHUNG EINES KEILTRIEBWERKZEUGES**

DEVICE AND METHOD FOR MONITORING A WEDGE DRIVE TOOL

DISPOSITIF ET PROCÉDÉ DE SURVEILLANCE D'UN OUTIL D'ENTRAÎNEMENT DE CLAVETTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2017 DE 102017130873**

(43) Veröffentlichungstag der Anmeldung:
**28.10.2020 Patentblatt 2020/44**

(73) Patentinhaber: **Fibro GmbH**
**74855 Hassmersheim (DE)**

(72) Erfinder: **REINMUTH, Norbert**
**74855 Hassmersheim (DE)**

(74) Vertreter: **Staeger & Sperling**
**Partnerschaftsgesellschaft mbB**
**Sonnenstraße 19**
**80331 München (DE)**

(56) Entgegenhaltungen:
**EP-A1- 1 764 168        EP-A1- 3 002 650**
**DE-A1-102006 034 974    DE-U1-202014 101 508**
**US-A1- 2017 014 888**

**Beschreibung**

Die Erfindung betrifft ein Verfahren sowie eine Vorrichtung zur Durchführung zur Überwachung eines Keiltriebwerkzeugs.

Im Stand der Technik sind bereits Verfahren bekannt, um Diagnosen und Vorhersagen zur Fertigungsmaschinen oder Produktionsanlagen zu treffen. Die Anlagenverfügbarkeit und Funktionsfähigkeit einer Maschine, wie z. B. eines Keiltriebwerkzeugs stellt einen wichtigen Faktor für die wirtschaftliche Nutzung dieser Einrichtung dar.

Es gibt allerdings zwei grundsätzlich unterschiedliche Folgen, wenn ein Anlagenteil oder Aggregat in einer Anlage ausfällt. Bei manchen Bauteilen kommt es lediglich zum Stillstand der Anlage, was zwar unerwünscht ist, aber es lassen sich Folgeschäden vermeiden. Bei einer zweiten Gruppe von Vorrichtungen ist aber die Folge eines Funktionsausfalls teilweise mit erheblichen Folgeschäden verbunden, so zum Beispiel bei einem Keiltriebwerkzeug. Ist die Rückstellkraft einer Gasdruckfeder zu gering und wird ein solcher in einer Presse montierter Keiltriebwerkzeug nach dem jeweiligen Pressenhub dadurch nicht mehr vollständig zurück in seine Ausgangsposition betätigt, so kommt es beim nächsten Hub zu massiven Beschädigungen.

Die Hauptaufgabe eines Verfahren zur Überwachung eines funktionsfähigen Zustandes von insbesondere mit Gasdruckfedern oder hydraulischen Federn versehenen Keiltriebwerkzeugn besteht darin, möglichst ohne Betriebsunterbrechung im Produktionsprozess eine Beurteilung der Funktionsfähigkeit der Gasdruckfeder zu ermöglichen.

Durch vorbeugende Instandhaltung und Erfahrungswerte können zwar die Verfügbarkeiten der Produktionsanlagen verbessert und gleichzeitig die Ausfallzeiten und Folgeschäden der Anlagen sowie die Kosten der Instandhaltung reduziert werden. Nachteilig bleibt dabei aber, dass es selten möglich ist, exakte Vorhersagen über den Zustand und den Zeitpunkt zu treffen, bei der die Feder z. B. die Gasdruckfeder nicht mehr die ausreichende Rückstellkraft aufbringt, um den Keiltriebwerkzeug vollständig auseinander zu fahren. Ferner ist es bei einer vorbeugenden Instandhaltung immer wieder der Fall, dass Teile, wie eine Gasdruckfeder vorsorglich ausgetauscht werden, die jedoch noch über eine hohe Reststandzeit verfügen. Andererseits gibt es auch bei neu eingebauten Gasdruckfedern Ereignisse, bei denen z. B. aufgrund überhöhter Belastung eine vergleichsweise junge Gasdruckfeder bereits nicht mehr die erforderliche Rückstellkraft aufbringen kann.

Eine alternative Form der Vermeidung von Schäden liegt in der Prozessüberwachung. Die zustandsbezogene Prozessüberwachung sieht z. B. vor, dass der Druck der Gasdruckfeder überwacht wird.

In der Druckschrift US 52 69 167 A wird vorgeschlagen, einen Arbeitsschieber mittels des pressengesteuert aufwärts bewegten Treibers über sog. Zwangsrückholer in Richtung Ausgangsposition zurück zu bewegen. Eine solche Anordnung erübrigt in nachteiliger Weise nicht eine vorbeugende Instandhaltung mit häufiger, aufwändiger Kontrolle der jeweiligen Gasdruckfeder bzw. Federn. Trotz dieser Maßnahmen kann jedoch ein plötzliches Versagen einer oder mehrerer Rückstellfedern während des Betriebes des Keiltriebwerkzeuges nicht sofort erkannt werden, wodurch die Gefahr eines Werkzeugbruches bzw. einer Beschädigung oder Zerstörung gegeben ist bei weiterem Einwirken des pressengesteuerten Treibers auf den Arbeitsschieber.

In der DE 10 2006 034 974 A1 wird hierzu vorgeschlagen bei Presswerkzeugen bei denen Keiltriebwerkzeug verwendet werden, welche durch die Bewegung des Pressenstempels in Arbeitsposition gebracht und in der Regel durch Federkraft wieder zurück in die Ausgangslage verschoben zu überwachen. Um sicherzustellen, dass die Schieber wieder in die Ausgangslage zurückbewegt wurden, wird erfindungsgemäß vorgeschlagen, eine signalgebende Vorrichtung vorzusehen, die ein Signal abgibt, wenn die Rückstelleinrichtung (Feder etc.) unwirksam geworden ist. Als Lösung schlägt die DE 10 2006 034 974 A1 hierzu vor ein optisches und/oder ein akustisches und/oder ein Steuersignal zu erzeugen, wobei letzteres vorzugsweise ein elektrisches/elektronisches und/oder ein hydraulisches Steuersignal zur vorteilhaft sofortigen Abschaltung einer mit dem Keiltriebwerkzeug ausgerüsteten Presse ist. Mit einer sofort, auch händisch aufgrund eines optischen oder akustischen Signals bewirkten Abschaltung der Presse ist in vorteilhaft einfacher Weise eine Beschädigung oder Zerstörung des Keiltriebwerkzeuges sicher vermieden.

Nachteilig bleibt aber, dass die Zeitspanne zwischen Detektion des Signals und ggf. händischer oder auch maschineller Abschaltung zu kurz sein kann und es immer noch zu einer Beschädigung von Keiltriebwerkzeug und Presse kommen kann. Somit ist eine Überwachung mit einem Positionssensor nur bedingt geeignet. Ferner wäre es wünschenswert die Bewegungshäufigkeit des Keiltriebwerkzeugs zu erfassen, um eine Prognose für die Restlebensdauer zu erhalten. Weiter ist aus der DE 10 2006 034 974 A1 ein Verfahren zur insbesondere positionssensorlosen Positionsüberwachung und Beurteilung der korrekten Position eines Schiebers insbesondere Arbeitsschieber eines Keiltriebwerkzeugs nach dem Oberbegriff des Anspruchs 1 bekannt.

Es ist ausgehend vom Stand der Technik daher Aufgabe der vorliegenden Erfindung, die vorbesagten Nachteile zu überwinden und eine einfachere, weniger aufwendige und zuverlässige Vorrichtung zur Überwachung eines Keiltriebwerkzeugs bereit zu stellen.

Diese Aufgabe wird durch die in Anspruch 1 angegebenen Merkmale gelöst.

Ein Grundgedanke der Erfindung besteht darin, nicht eine direkte Positionsüberwachung des Keiltriebwerkzeugs mit Positionssensoren vorzunehmen, sondern eine indirekte Positionserfassung vorzunehmen, bei der eine Auswerteelektronik den folgenden mathematischen Zusammenhang zur Auswertung heranzieht:

$$Z(x,t) \sim F_m(x,t)$$

$$P_S(t) \sim F_S(x)$$

mit

$$Z(x,t) = \begin{cases} Pi\ unzulässig, & Fm(x) < Fs(x) \\ Pi\ zulässig, & Fm(x) \geq Fs(x) \end{cases}$$

wobei

$Z(x,t)$: den jeweiligen Zustandswert zum Zeitpunkt t darstellt, der eine zulässige oder unzulässige Position des Schiebers des Keiltriebwerkzeugs an der Position x zwischen den möglichen Positionen $X_A$ und $X_E$ (Ausgangsposition und Endposition), wenn das Schieberbett entlastet ist repräsentiert,

$F_m(t)$ Rückstellkraft der Feder zum Zeitpunkt t,

$F_s(x)$ die erforderliche Soll-Rückstellkraft der Feder am Ort x, um den Keiltriebwerkzeug vollständig zurück in seine Ausgangsposition zu betätigen,

$P_S(t)$ die Soll-Position des Keiltriebwerkzeugs zum Zeitpunkt t und

Pi die Ist-Position des Keiltriebwerkzeugs zum Messzeitpunkt der Größe $F_m(t)$.

Die Überwachung kann auch vollständig zeitinvariant, d. h. zeitkontinuierlich oder auch zeitdiskontinuierlich für bestimmte Soll-Positionen und/oder Zeitpunkte erfolgen, indem die die Größe $F_m(x)$ überwacht wird und daraus ein Rückschluss auf die Ist-Position $P_i$ des Keiltriebwerkzeugs gezogen werden kann.

Erfindungsgemäß ist demnach ein Verfahren zur insbesondere positionssensorlosen Positionsüberwachung und Beurteilung der korrekten Position $P_i$ eines Schiebers insbesondere Arbeitsschiebers eines Keiltriebwerkzeugs in einer Presse bei der Betätigung des Schieberbettes des Keiltriebwerkzeugs von einer Endposition $X_E$ zurück in seine Ausgangsposition $X_A$ mittels einer Feder, vorzugsweise einer im Keiltriebwerkzeug angeordneten Gasdruckfeder beim Öffnen der Presse von einer unteren in eine obere Pressenposition, während der Treiber des Keiltriebwerkzeugs entlastet ist, wobei eine mittelbare und indirekte Positionserfassung des Schiebers vorgesehen ist, bei der zumindest die Rückstellkraft der Feder erfasst und ausgewertet wird.

Erfindungsgemäß ist zudem vorgesehen das Verfahren mit den folgenden Schritten auszuführen:

a) Erfassen der Rückstellkraft $F_m(t)$ der Feder oder Gasdruckfeder zu wenigstens einem Zeitpunkt t, der am oder nach dem Beginn des jeweiligen Öffnungsvorgangs der Presse liegt, bei dem sich der Schieber betätigt durch die Gasdruckfeder entlang der Strecke x von seiner Endposition $X_E$ zurück in seine Ausgangsposition $X_A$ bewegen soll;

b) Ermitteln mit einer Auswerteelektronik, ob die Rückstellkraft $F_m(t)$ größer, gleich oder kleiner einer vorgegebenen Soll-Rückstellkraft ist $F_S(x)$ ist, die die Rückstellkraft am Ort x des Schiebers haben soll und

c) Ermitteln des jeweiligen Zustandswert zum Zeitpunkt t welcher eine zulässige oder unzulässige Ist-Position $P_i$ des Schiebers des Keiltriebwerkzeugs an der Position x zwischen den möglichen Positionen $X_A$ und $X_E$ (Ausgangsposition und Endposition) repräsentiert, mit

$$Z(x,t) = \begin{cases} Pi\ unzulässig, & Fm(x) < Fs(x) \\ Pi\ zulässig, & Fm(x) \geq Fs(x) \end{cases}$$

d) Erzeugen einer Aktion zum Anhalten der Presse, wenn man als Zustandswert den Wert $P_i$ als unzulässig ermittelt.

Bevorzugt ist vorgesehen, dass die Feder über eine drahtlose Datenübertragungseinrichtung verfügt, um die gemessene Rückstellkraft $F_m(t)$ an die Auswerteelektronik zu übermitteln. Diese kann integriert in der Rückstellfeder oder an dem Gehäuse der Feder angeordnet sein.

In einer weiteren vorteilhaften Ausgestaltung der Erfindung ist vorgesehen, dass ferner mittels eines Piezoelements eine Hubzählung der Feder erfolgt und aus der Hubzahl N und dem zeitlichen Differential der bei jedem Hub gemessenen Rückstellkraft $F_m(t)$ der Feder eine Aussage über die verbleibende Standzeit und/oder Anzahl verbleibender Hübe getroffen wird. Erfindungsgemäß muss nicht zwingend die Rückstellkraft bei jedem Hub gemessen werden, um ein Differential zwischen aufeinanderfolgenden Hüben zu ermitteln. Hier kann man je nach Konstanz auch nur nach einer jeweils definierten Anzahl von Hüben das Differential ermitteln. Sinkt die Rückstellkraft zum Beispiel im Bereich von weniger als 0,1%, so kann man das entsprechende Differential mit Messwerten bilden, die nach einer entsprechend großen Anzahl von Hüben z. B. alle 100 oder 1000 Hüben erfolgt, um aus dem zeitlichen Differential auf die Konstanz oder Abnahme der Rückstellkraft und daraus auf die verbleibende Standzeit zu schließen.

In einer ebenfalls vorteilhaften Ausgestaltung der Erfindung ist vorgesehen, dass mittels eines Piezoelements ein spezifisches Schwingungsmuster je Hub der Feder erfasst wird und aus der Veränderung des Schwingungsmusters eine Aussage über die verbleibende Standzeit und/oder Anzahl verbleibender Hübe getroffen wird. Dabei kann aus Referenzwerten solcher Schwingungsmuster, bei Gasdruckfedern, die bei vergleichbaren Rahmenbedingungen im Einsatz waren auf deren Restlebensdauer oder verbleibende Standzeit geschlossen werden.

Ein weiterer Aspekt der vorliegenden Erfindung betrifft eine Vorrichtung zur insbesondere positionssensorlosen Positionsüberwachung und Beurteilung der korrekten Position $P_i$ eines Keiltriebwerkzeugs in einer Presse bei der Betätigung des Keiltriebwerkzeugs von einer Endposition $X_E$ zurück in seine Ausgangsposition $X_A$ mittels einer Feder vorzugsweise einer im Keiltriebwerkzeug angeordneten Gasdruckfeder beim Öffnen der Presse von einer unteren in eine obere Pressenposition, wobei hierzu Messmittel und Auswertemittel vorgesehen sind, mit der zumindest die Rückstellkraft $F_m(t)$ der Feder zu einem Zeitpunkt t beim Öffnen der Presse erfasst und wobei die Auswertemitteln ausgebildet sind die Messdaten gemäß dem zuvor beschriebenen Verfahren auszuwerten.

Weiter vorteilhaft ist es, wenn ein Abschaltmittel vorgesehen ist, um die Presse unmittelbar abhängig vom Wert der erfassten Rückstellkraft $F_m(t)$ der Feder abzuschalten.

In einer weiteren vorteilhaften Ausgestaltung der Erfindung ist vorgesehen, wenn eine drahtlose Datenübertragungseinrichtung zum Übertragen von Messdaten, insbesondere der Rückstellkraft $F_m(t)$ der Feder an eine Auswerteinrichtung vorgesehen ist. Eine weitere Option zur Sicherstellung eines funktionierenden Betriebs kann darin gesehen werden, dass ein RFID-Chip oder eine andere Erkennungseinrichtung an der Gasdruckfeder vorgesehen ist, die Daten umfasst, die es erlauben eindeutig zuzuordnen, ob das Bauteil ein Bauteil des Herstellers des besagten Bauteils ist oder ein Ersatzprodukt bzw. Austauschprodukt eines anderen Herstellers.

Dies ist insofern von Relevanz, da Austauschprodukte ggf. mit der Datenerfassung und Auswertung nicht vollständig kompatibel sind und somit ein Signal an den Anwender ausgegeben werden kann, dass z. B. die ausgetauschte Gasdruckfeder nicht korrekt mit den anderen Einrichtungen kompatibel ist und Messwertfehler nicht auszuschließen sind z. B. aufgrund einer fehlerhaften Kalibrierung.

Ebenfalls vorteilhaft ist es, wenn eine Messsensorik zum Messen der Rückstellkraft der Feder und/oder eine Datenübertragungseinrichtung angeordnet in einer lösbar mit der Feder verbundenen Datenbox mit einem die Datenbox umgebenden Gehäuse vorgesehen ist.

Weiter vorteilhaft ist es, wenn ferner ein Piezosensor zum Messen der Hubzahl und/oder einer Schwingungscharakteristik der Feder oder dem mit der Feder verbundenen Keiltriebwerkzeug vorgesehen ist.

Ein weiterer Aspekt der vorliegenden Erfindung betrifft Keiltriebwerkzeug zum Betrieb in einer Presse, wobei das Keiltriebwerkzeug mit einem pressengesteuerten Schieberbett zum Antrieb eines über schräge Gleitflächen in Arbeitsrichtung bewegbaren Schiebers des Keiltriebwerkzeugs verfügt, der relativ zu einem maschinenstarr angeordneten Treiber bei Entlastung vom Schieberbett mittels einer Feder in Ausgangsposition $X_A$ bringbar ist, wobei eine wie zuvor beschriebene Vorrichtung vorgesehen ist, um die Positionsüberwachung und Beurteilung der korrekten Position $P_i$ des Schiebers des Keiltriebwerkzeugs, insbesondere bei Entlastung vom Schieberbett vorgesehen ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen dabei:

Fig. 1 eine schematische Darstellung einer Presse mit einem Keiltriebwerkzeug im geschlossenen Zustand der Presse, d. h. Pressenoberteil und Pressenunterteil zusammen gefahren,

Fig. 2 eine schematische Darstellung einer Presse mit einem Keiltriebwerkzeug im geöffneten Zustand der Presse d. h. Pressenoberteil und Pressenunterteil auseinander gefahren und

Fig. 3 eine Datenbox, die zur lösbaren Verbindung an einer Gasdruckfeder ausgebildet ist.

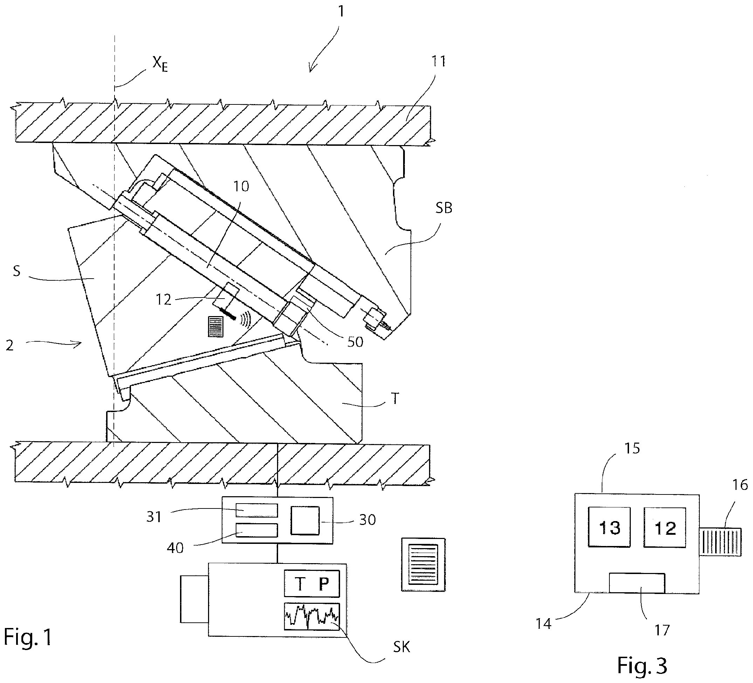

Im Folgenden wird die Erfindung mit Bezug auf die Figuren 1 bis 3 näher erläutert, wobei gleiche Bezugszeichen auf gleiche strukturelle und/oder funktionale Merkmale hinweisen.

In Fig. 1 ist eine schematische Darstellung einer Presse 11 mit einem Keiltriebwerkzeug 1 mit der erfindungsgemäßen Vorrichtung 1.

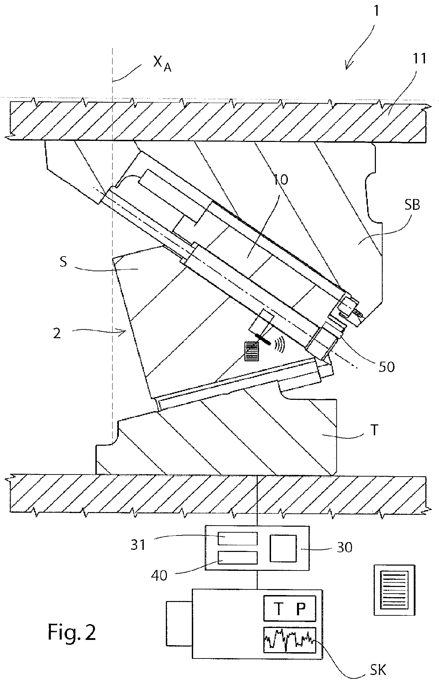

Die Vorrichtung 1 ist ausgebildet zur insbesondere positionssensorlosen Positionsüberwachung und Beurteilung der korrekten Position $P_i$ eines Keiltriebwerkzeugs 2, zwischen einer Position $X_E$ (siehe Figur 1) und einer Position $X_A$ (siehe Figur 2), welches in einer Presse 11 angeordnet ist.

Das Keiltriebwerkzeug 2 ist in einer Presse 11 montiert, wobei das Keiltriebwerkzeug 2 mit einem pressengesteuerten Schieberbett SB zum Antrieb eines über schräge Gleitflächen in Arbeitsrichtung bewegbaren Schieber S des Keiltriebwerkzeugs 2 verfügt, der relativ zu einer maschinenstarr angeordneten Treiber T bei Entlastung vom Schieberbett SB mittels einer Feder 10 in Ausgangsposition $X_A$ bringbar ist.

Die Vorrichtung 1 ist ausgebildet bei der Betätigung des Keiltriebwerkzeugs 2 von einer Endposition $X_E$ zurück in seine Ausgangsposition $X_A$ mittels der Gasdruckfeder 10 beim Öffnen der Presse 11 die korrekte Funktion der Rückstellfeder 10 zu beurteilen, wobei hierzu Messmittel und Auswertemittel vorgesehen sind, mit der zumindest die Rückstellkraft $F_m(t)$ der Feder 10 zu einem Zeitpunkt t beim Öffnen der Presse 11 erfasst wird und wobei Auswertemitteln 31 ausgebildet sind, die entsprechenden Messdaten auszuwerten.

Rein schematisch sind Abschaltmittel 40 dargestellt, welche mit den Auswertemittel 30 verbunden sind, um die Presse 11 unmittelbar abhängig vom Wert der erfassten Rückstellkraft $F_m(t)$ der Feder 10 abzuschalten.

Wie in der Figur 1 weiter zu erkennen ist, ist die Datenübertragungseinrichtung 12 als eine drahtlose Datenübertragungseinrichtung zum Übertragen von Messdaten ausgebildet, wobei insbesondere die Rückstellkraft $F_m(t)$ der Gasdruckfeder 10 an die Auswerteeinrichtung 30 auf diese Weise übertragen wird.

Die in Figur 3 dargestellte Datenbox 14 verfügt über einen integrierten Energiespeicher 17, eine Messsensorik 13 zum Messen der Rückstellkraft der Feder 10 und die Datenübertragungseinrichtung 12. Die Datenbox 14 ist mit einem die Datenbox 14 umgebenden Gehäuse 15 versehen und mit einer Schraubverriegelung 16 zur lösbaren Verbindung an der Feder 10. Auf diese Weise kann die Datenbox 14 mobil und autonom ausgebildet sein und je nach Typ der Gasdruckfeder individuell angepasst werden. In einer optionalen Ausführung kann die Datenbox 14 auch Sollwertspeicher umfassen, um Sollwerte für Sensoren, Batteriespannung, Spannungsüberwachung des Energiespeichers 17 und dergleichen zu erfassen.

Ferner ist in der Figur 1 - lediglich beispielhaft- ein Piezosensor 50 zum Messen der Hubzahl und/oder einer Schwingungscharakteristik SK der Feder 10 gezeigt.

## Patentansprüche

1. Verfahren zur insbesondere positionssensorlosen Positionsüberwachung und Beurteilung der korrekten Position $P_i$ eines Schiebers insbesondere Arbeitsschiebers eines Keiltriebwerkzeugs (2) in einer Presse (11) bei der Betätigung des Schieberbettes des Keiltriebwerkzeugs (2) von einer Endposition ($X_E$) zurück in seine Ausgangsposition ($X_A$) mittels einer Feder, vorzugsweise einer im Keiltriebwerkzeug (2) angeordneten Gasdruckfeder (10) beim Öffnen der Presse (11) von einer unteren in eine obere Pressenposition, wobei eine mittelbare und indirekte Positionserfassung des Schiebers vorgesehen ist, bei der zumindest die Rückstellkraft der Feder (10) erfasst und ausgewertet wird, **gekennzeichnet durch** die folgenden Schritte:

   a) Erfassen der Rückstellkraft $F_m(t)$ der Feder (10) zu wenigstens einem Zeitpunkt t, der am oder nach dem Beginn des jeweiligen Öffnungsvorgangs der Presse (11) liegt, bei dem sich der Schieber betätigt durch die die Feder entlang der Strecke x von seiner Endposition ($X_E$) zurück in seine Ausgangsposition ($X_A$) bewegen soll;
   b) Ermitteln mit einer Auswerteelektronik, ob die Rückstellkraft $F_m(t)$ größer, gleich oder kleiner einer vorgegebenen Soll-Rückstellkraft ist $F_S(x)$ ist, die die Rückstellkraft am Ort x haben soll und
   c) Ermitteln des jeweiligen Zustandswert zum Zeitpunkt t welcher eine zulässige oder unzulässige Ist-Position $P_i$ des Keiltriebwerkzeugs an der Position x zwischen den möglichen Positionen $X_A$ und $X_E$-Ausgangsposition und Endposition - repräsentiert, mit

$$Z(x,t) = \begin{cases} Pi\ unzulässig, & Fm(x) < Fs(x) \\ Pi\ zulässig, & Fm(x) \geq Fs(x) \end{cases}$$

   d) Erzeugen einer Aktion zum Anhalten der Presse, wenn man als Zustandswert den Wert $P_i$ als unzulässig ermittelt.

2. Verfahren nach Anspruch 1, wobei die Feder (10) über eine drahtlose Datenübertragungseinrichtung (12) verfügt, um die gemessene Rückstellkraft $F_m(t)$ an die Auswerteelektronik zu übermitteln.

3. Verfahren nach einem der Ansprüche 1 oder 2, wobei ferner mittels eines Piezoelements eine Hubzählung der Feder (10) erfolgt und aus der Hubzahl N und dem zeitlichen Differential der je Hub gemessenen Rückstellkraft $F_m(t)$ der Feder (10) eine Aussage über die verbleibende Standzeit und/oder Anzahl verbleibender Hübe getroffen wird.

4. Verfahren nach einem der Ansprüche 1 bis 3, wobei ferner mittels eines Piezoelements ein spezifisches Schwingungsmuster je Hub der Feder erfasst wird und aus der Veränderung des Schwingungsmusters eine Aussage über die verbleibende Standzeit und/oder Anzahl verbleibender Hübe getroffen wird oder ein Maß der Verschleißerkennung detektiert wird.

5. Vorrichtung (1) zur insbesondere positionssensorlosen Positionsüberwachung und Beurteilung der korrekten Position $P_i$ eines Keiltriebwerkzeugs (2) in einer Presse bei der Betätigung des Keiltriebwerkzeugs von einer Endposition ($X_E$) zurück in seine Ausgangsposition ($X_A$) mittels einer Feder vorzugsweise einer im Keiltriebwerkzeug angeordneten Gasdruckfeder (10) beim Öffnen der Presse (11) von einer unteren in eine obere Pressenposition, wobei hierzu Messmittel und Auswertemittel vorgesehen sind, mit der zumindest die Rückstellkraft $F_m(t)$ der Feder (10) zu einem Zeitpunkt t beim Öffnen der Presse (11) erfasst, **dadurch gekennzeichnet, dass** die Auswertemitteln (31) ausgebildet sind die Messdaten gemäß dem Verfahren nach Anspruch 1 bis 4 auszuwerten.

6. Vorrichtung (1) nach Anspruch 5, **dadurch gekennzeichnet, dass** Abschaltmittel vorgesehen sind, um die Presse (11) unmittelbar abhängig vom Wert der erfassten Rückstellkraft $F_m(t)$ der Feder (10) abzuschalten.

7. Vorrichtung (1) nach Anspruch 5 oder 6, weiter umfassend eine drahtlose Datenübertragungseinrichtung (12) zum Übertragen von Messdaten, insbesondere der Rückstellkraft $F_m(t)$ der Feder (10) an eine Auswerteeinrichtung.

8. Vorrichtung nach einem der Ansprüche 5 bis 7, **dadurch gekennzeichnet, dass** eine Messsensorik (13) zum Messen der Rückstellkraft der Feder (10) und/oder eine Datenübertragungseinrichtung (12) angeordnet in einer lösbar mit der Feder (10) verbundenen Datenbox (14) mit einem die Datenbox (14) umgebenden Gehäuse (15) vorgesehen ist.

9. Vorrichtung nach einem der Ansprüche 5 bis 8, **dadurch gekennzeichnet, dass** ferner ein Piezosensor zum Messen der Hubzahl und/oder einer Schwingungscharakteristik der Feder (10) oder dem mit der Feder (10) verbundenen Keiltriebwerkzeug vorgesehen ist.

10. Keiltriebwerkzeug (2) zum Betrieb in einer Presse (11), wobei das Keiltriebwerkzeug (2) mit einem pressengesteuerten Schieberbett zum Antrieb eines über schräge Gleitflächen in Arbeitsrichtung bewegbaren Schiebers des Keiltriebwerkzeugs (2) verfügt, der relativ zu einem maschinenstarr angeordneten Treiber bei Entlastung vom Schieberbett mittels einer Feder (10) in Ausgangsposition ($X_A$) bringbar ist, wobei eine Vorrichtung nach einem der Ansprüche 5 bis 9 vorgesehen ist, um eine Positionsüberwachung und Beurteilung der korrekten Position $P_i$ des Keiltriebwerkzeugs, insbesondere des Schiebers bei Entlastung vom Schieberbett vorgesehen ist.

**Claims**

1. A method for monitoring the position and assessing the correct position $P_i$ of a slide, particularly a work slide of a wedge drive tool (2) in a press (11), in particular without a position sensor, while actuating the slide bed of the wedge drive tool (2) from an end position ($X_E$) back to the starting position ($X_A$) of the slide using a spring, preferably a gas pressure spring (10) which is arranged in the wedge drive tool (2), when opening the press (11) from a lower press position to an upper press position, wherein the position of the slide is indirectly detected in that at least the restoring force of the spring (10) is detected and evaluated, **characterized by** the following steps:

   a) Detecting the restoring force $F_m(t)$ of the spring (10) at at least one point in time t, which is either at or after the beginning of the respective opening process of the press (11) in which the slide, actuated by the spring, is to move along the path x from its end position ($X_E$) back to its starting position ($X_A$);
   b) Determining by means of an electronic evaluation unit, whether the restoring force $F_m(t)$ is equal to, greater or smaller than a specified target restoring force Fs (x), which the restoring force at the location x of the slide should correspond to; and
   c) Determining the respective condition value at the point in time t, which represents a permissible or impermissible actual position $P_i$ of the wedge drive tool at position x between the potential positions $X_A$ and $X_E$ -

starting position and end position -, where

$$Z(x,t) = \begin{cases} P_i \ \text{impermissible}, & Fm(x) < Fs(x) \\ P_i \ \text{permissible}, & Fm(x) \geq Fs(x) \end{cases}$$

d) Generating an action for stopping the press if the condition value $P_i$ is found to be impermissible.

2. The method according to claim 1, wherein the spring (10) comprises a wireless data transmission means (12) to transmit the measured restoring force $F_m(t)$ to the electronic evaluation unit.

3. The method according to any one of claims 1 or 2, wherein furthermore a piezo element counts the strokes of the spring (10), and a statement about the remaining service life and/or number of remaining strokes is made based on the strike rate N and the time differential of the restoring force $F_m(t)$ of the spring (10) as measured per each stroke.

4. The method according to any one of claims 1 to 3, wherein furthermore a piezo element can be used to detect a specific vibration pattern per stroke of the spring, and a statement about the remaining service life and/or the number of remaining strokes can be made, or a measure of wear detection is detected, based on the change in the vibration pattern.

5. A device (1) for position monitoring, particularly without position sensors, and assessment of the correct position $P_i$ of a wedge drive tool (2) in a press when actuating the wedge drive tool from an end position ($X_E$) back into its starting position ($X_A$) using a spring, preferably a gas pressure spring (10) disposed in the wedge drive tool when opening the press (11) from a lower press position into an upper press position, wherein measuring and evaluation means are provided which at least detect the restoring force $F_m(t)$ of the spring (10) at a point in time t when opening the press (11), **characterized in that** said evaluation means (31) are configured to evaluate the measured data according to the method of claims 1 to 4.

6. The device (1) according to claim 5, **characterized in that** shutdown means are provided to directly shut down the press (11) depending on the value of the detected restoring force $F_m(t)$ of the spring (10).

7. The device (1) according to claim 5 or 6, further including a wireless data transmission means (12) for transmitting measured data, particularly the restoring force $F_m(t)$ of the spring (10) to an evaluating means.

8. The device according to any one of claims 5 to 7, **characterized in that** a measuring sensor system (13) for measuring the restoring force of the spring (10) and/or a data transmission means (12) is/are arranged in a data locker (14) detachably connected to the spring (10) with a housing (15) enclosing the data locker (14).

9. The device according to any one of claims 5 to 8, **characterized in that** a piezo sensor for measuring the number of strokes and/or the vibration characteristics of the spring (10) or of the wedge drive tool connected to the spring (10) is provided.

10. A wedge drive tool (2) for operating a press (11), wherein the wedge drive tool (2) has a press-controlled slide bed for driving a slide of the wedge drive tool (2), which can be moved in the working direction via inclined sliding surfaces, which slide can be brought into its starting position ($X_A$) relative to a rigidly disposed driver by a spring (10), wherein a device according to claims 5 to 9 is provided to monitor the position and to evaluate the correct position $P_i$ of the slide of the wedge drive tool, particularly when relived from the slide bed.

## Revendications

1. Procédé de surveillance de position, en particulier sans capteur de position, et d'évaluation de la position correcte $P_i$ d'un coulisseau, en particulier d'un coulisseau de travail, d'un outil chasse-clavette (2) dans une presse (11) lors de l'actionnement du bâti de coulisseau de l'outil chasse-clavette (2) d'une position finale ($X_E$) de retour à sa position initiale ($X_A$) au moyen d'un ressort, de préférence d'un ressort à gaz (10) disposé dans l'outil chasse-clavette (2) lors de l'ouverture de la presse (11) d'une position de presse inférieure à une position de presse supérieure, dans lequel une détection de position indirecte du coulisseau est prévue dans laquelle au moins la force de rappel du ressort (10) est détectée et évaluée,

**caractérisé par** les étapes suivantes consistant à

a) détecter la force de rappel $F_m(t)$ du ressort (10) au moins à un instant t qui se situe au début ou après le début du processus d'ouverture respectif de la presse (11) dans lequel le coulisseau, en étant actionné par le ressort, doit revenir le long du trajet x de sa position finale ($X_E$) à sa position initiale ($X_A$) ;

b) établir à l'aide d'une électronique d'évaluation si la force de rappel $F_m(t)$ est supérieure, égale ou inférieure à une force de rappel de consigne Fs(x) que la force de rappel doit avoir à l'emplacement x, et

c) établir la valeur d'état respective à l'instant t qui représente une position réelle $P_i$ admissible ou inadmissible de l'outil chasse-clavette dans la position x entre les positions $X_A$ et $X_E$ - position initiale et position finale - possibles, où

$$Z(x,t) = \begin{cases} Pi\ inadmissible & Fm(x) < Fs(x) \\ Pi\ admissible & Fm(x) \geq Fs(x) \end{cases}$$

d) générer une action pour arrêter la presse si en tant que valeur d'état la valeur $P_i$ est établie comme inadmissible.

2. Procédé selon la revendication 1, dans lequel le ressort (10) dispose d'un dispositif de transmission de données sans fil (12) pour transmettre la force de rappel $F_m(t)$ mesurée à l'électronique d'évaluation.

3. Procédé selon l'une quelconque des revendications 1 ou 2, dans lequel en outre un comptage de courses du ressort (10) est effectué au moyen d'un élément piézoélectrique, et selon le nombre de courses N et la différence de temps de la force de rappel $F_m(t)$ du ressort (10), mesurée pour chaque course, on porte un jugement sur la durée de vie restante et/ou le nombre de courses restantes.

4. Procédé selon l'une quelconque des revendications 1 à 3, dans lequel en outre un schéma d'oscillation spécifique est détecté au moyen d'un élément piézoélectrique pour chaque course du ressort, et selon la variation du schéma d'oscillation, on porte un jugement sur la durée de vie restante et/ou le nombre de courses restantes, ou un degré de la reconnaissance d'usure est détecté.

5. Dispositif (1) de surveillance de position, en particulier sans capteur de position, et d'évaluation de la position correcte $P_i$ d'un outil chasse-clavette (2) dans une presse lors de l'actionnement de l'outil chasse-clavette d'une position finale ($X_E$) de retour à sa position initiale ($X_A$) au moyen d'un ressort, de préférence d'un ressort à gaz (10) disposé dans l'outil chasse-clavette, lors de l'ouverture de la presse (11) d'une position de presse inférieure à une position de presse supérieure, dans lequel des moyens de mesure et des moyens d'évaluation sont prévus à cet effet par lesquels au moins la force de rappel $F_m(t)$ du ressort (10) à un instant t à l'ouverture de la presse (11) est détectée, **caractérisé en ce que** les moyens d'évaluation (31) sont réalisés pour évaluer les données de mesure selon le procédé selon les revendications 1 à 4.

6. Dispositif (1) selon la revendication 5, **caractérisé en ce que** des moyens de coupure sont prévus pour couper la presse (11) immédiatement en fonction de la valeur de la force de rappel $F_m(t)$ détectée du ressort (10).

7. Dispositif (1) selon la revendication 5 ou 6, comprenant en outre un dispositif de transmission de données sans fil (12) pour transmettre des données de mesure, en particulier la force de rappel $F_m(t)$ du ressort (10) à un dispositif d'évaluation.

8. Dispositif selon l'une quelconque des revendications 5 à 7, **caractérisé en ce qu'**un système de capteurs de mesure (13) pour mesurer la force de rappel du ressort (10) et/ou un dispositif de transmission de données (12), disposé dans une boîte de données (14) reliée de manière amovible au ressort (10) et pourvu d'un boîtier (15) entourant la boîte de données (14), est/sont prévu(s).

9. Dispositif selon l'une quelconque des revendications 5 à 8, **caractérisé en ce qu'**en outre un capteur piézoélectrique pour mesurer le nombre de courses et/ou une caractéristique d'oscillation du ressort (10) ou de l'outil chasse-clavette relié au ressort (10) est prévu.

10. Outil chasse-clavette (2) destiné à fonctionner dans une presse (11), dans lequel l'outil chasse-clavette (2) dispose d'un bâti de coulisseau commandé par la presse pour entraîner un coulisseau de l'outil chasse-clavette (2), mobile dans la direction de travail sur des surfaces coulissantes inclinées, et qui, en cas de relâchement du bâti de coulisseau, peut être amené à la position initiale ($X_A$) au moyen d'un ressort (10) par rapport à un dispositif d'entraînement disposé de manière solidaire de la machine dans lequel un dispositif selon l'une quelconque des revendications 5 à 9 est prévu pour effectuer une surveillance de position et une évaluation de la position correcte $P_i$ de l'outil chasse-clavette, en particulier du coulisseau en cas de relâchement du bâti de coulisseau.

Fig. 3

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5269167 A
- DE 102006034974 A1